**Europäisches Patentamt**

**European Patent Office**

**Office européen des brevets**

(11) Veröffentlichungsnummer: **0 111 971**

**B1**

(12) **EUROPÄISCHE PATENTSCHRIFT**

(45) Veröffentlichungstag der Patentschrift:
08.04.87

(21) Anmeldenummer: **83201766.9**

(22) Anmeldetag: **14.12.83**

(51) Int. Cl.⁴: **H 04 Q 7/04**, H 04 B 7/26

(54) **Verfahren und Steuereinrichtung zur Verteilung der Verkehrsmenge auf verschiedene Organisationskanäle eines Funkübertragungssystems.**

(30) Priorität: **17.12.82 DE 3246742**

(43) Veröffentlichungstag der Anmeldung:
**27.06.84 Patentblatt 84/26**

(45) Bekanntmachung des Hinweises auf die Patenterteilung:
**08.04.87 Patentblatt 87/15**

(84) Benannte Vertragsstaaten:
**AT BE CH DE FR GB IT LI NL SE**

(56) Entgegenhaltungen:
**EP-A-0 036 146**
**DE-B-2 733 503**

(73) Patentinhaber: **Philips Kommunikations Industrie AG, Thurn- und- Taxis- Strasse 10, D-8500 Nürnberg 10 (DE)**

(84) Benannte Vertragsstaaten: **DE**

(73) Patentinhaber: **N.V. Philips' Gloeilampenfabrieken, Groenewoudseweg 1, NL- 5621 BA Eindhoven (NL)**

(84) Benannte Vertragsstaaten:
**BE CH FR GB IT LI NL SE AT**

(72) Erfinder: **Grauel, Christoph, Dr. Ing., Andreas- Schramm- Strasse 14, D-8501 Feucht (DE)**
Erfinder: **Tarabout, Alain, 10 Rue Latecoere, F-78141 Velizy Cedex (FR)**
Erfinder: **Duplessis, Philippe, 10 Rue Latecoere, F-78141 Velizy Cedex (FR)**

(74) Vertreter: **Peuckert, Hermann, Philips Patentverwaltung GmbH Billstrasse 80 Postfach 10 51 49, D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Steuereinrichtung zur Verteilung der Verkehrsmenge auf verschiedene Organisationskanäle eines Funkübertragunossystems gemäß den Oberbegriffen der Ansprüche 1 und 11.

Bei einem aus der DE-AS 27 33 503 bekannten Nachrichten-Funksystem (Funkübertragungssystem) ist der Dienstbereich (das gesamte Versorgungsgebiet) in eine Vielzahl von Zonen (Funkzonen) eingeteilt (Zellularsystem) und jeder Funkzone sind mindestens ein Steuerkanal (Organisationskanal) und mehrere Sprechkanäle zugeordnet. In einer Funkzone mit einer großen Anzahl von beweglichen Fernsprechteilnehmern (beweglichen Funkstationen) ist es notwendig, in der beweglichen Funkstation (ortsfeste Funkstation) für mehrere Organisationskanäle je einen Sender/Empfänger vorzusehen. Um den Aufwand für die Sende- und Empfangstrennfilter zu verringern, sind das Sende- und Empfangsfrequenzband in jeweils ein oberes und ein unteres Band aufgeteilt. Die in mindestens zwei Gruppen (Teilmengen) eingeteilten beweglichen Funkstationen benutzen jeweils ein Band des Sende- und Empfangsfrequenzbandes. Die Aufteilung von Sende- und Empfangsfrequenzband in jeweils zwei Bänder ist so gewählt, daß beide Teilmengen von beweglichen Funkstationen ein gemeinsames Band aufweisen. In diesem gemeinsamen Band sind zumindest die Organisationskanäle angeordnet.

Eine bewegliche Funkstation, einer ersten Teilmenge wählt z.B. zum Verbindungsaufbau einen Organisationskanal aus. Dazu sucht die bewegliche Funkstation die der Teilmenge zugeordneten Organisationskanäle nach einem Organisationskanal mit gutem Signal/Geräusch-Verhältnis ab. Verschlechtert sich durch Störungen der Funkfeldausbreitung oder durch andere Ursachen das Signal/Geräusch-Verhältnis des ausgewählten Organisationskanals, so kann die bewegliche Funkstation, bei Empfang einer bestimmten Markierung eines Organisationskanals, auch einen Organisationskanal einer anderen Teilmenge, z.B. der zweiten Teilmenge, benutzen. Diese Zuordnung von Organisationskanälen einer anderen Teilmenge wird in einer Funkzone dann vorgenommen, wenn diese eine geringe Anzahl von beweglichen Funkstationen aufweist.

Sind in einer Funkzone mehrere Organisationskanäle vorgesehen, so ist die Verkehrsmenge, entsprechend der in dieser Funkzone befindlichen und eingebuchten beweglichen Funkstation, auf die Organisationskanäle dieser Funkzone verteilt. Beim bekannten Funkübertragungssystem (DE-AS 27 33 503) wird zur Verringerung des Aufwandes für die Sende uns Empfangstrennfilter eine Einteilung der beweglichen Funkstationen in Teilmengen vorgenommen. Eine Berücksichtigung der Verkehrssituation, insbesondere eine Steuerung durch Verteilung der Verkehrsmenge auf verschiedene Organisationskanäle ist nicht vorgesehen oder erwähnt. Sind einer Funkzone beispielsweise vier Organisationskanäle zugeordnet und befinden sich in der Funkzone von vier Teilmengen von beweglichen Funkstationen dort nur zwei Teilmengen, so verteilt sich die Verkehrsmenge auf jeweils zwei der beiden Teilmengen zugeordneten Organisationskanäle.

Wird in einer Funkzone die Anzahl der dieser Funkzone zugehörigen Organisationskanäle oder die Frequenz und damit die Kanalnummer eines Organisationskanals verändert, so sollen sich die beweglichen Funkstationen selbstständig und automatisch auf den dadurch gebildeten neuen Satz von Organisationskanälen verteilen. Wird beispielsweise der Funkzone ein neuer Organisationskanal zugeteilt, so soll möglichst verhindert werden, daß die bereits vorhandenen Organisationskanäle sowie der neue Organisationskanal kurzfristig durch eine Vielzahl von einzelnen Umbuchungen von beweglichen Funkstationen momentan überlastet werden.

Der Erfindung liegt die Aufgabe zugrunde, ein Verfahren und eine Steuereinrichtung zur Verteilung der Verkehrsmenge auf verschiedene Organisationskanäle einer Funkzone anzugeben. Bei Umkonfiguration, d.h. bei Ausfall eines Organisationskanals, sollen für die beweglichen Funkstationen keine individuellen Wechselbefehle auf einen neuen Organisationskanal erforderlich sein.

Diese Aufgabe wird durch die in den Ansprüchen 1 und 11 gekennzeichneten Merkmale gelöst.

Durch das erfindungsgemäße Verfahren kann eine annähernd gleichmäßige Verteilung der Verkehrsmenge auf verschiedene Organisationskanäle einer Funkzone eines Funkübertragungssystems erreicht werden.

In einer Funkverbindung mit der ortsfesten Funkstation steht ein Teil der Vielzahl von beweglichen Funkstationen.

Beim bekannten Funkübertragungssystem-(DE-AS 27 33 503) müssen im Falle eines Verbindungsaufbaus von ortsfester Funkstation zur beweglichen Funkstation diese auf allen Organisationskanälen der Funkzone gerufen werden. Diese unnötige Belastung aller Organisationskanäle kann durch das erfindungsgemäße Verfahren vermieden werden. Weiterhin kann die Zahl von Umbuchungen von beweglichen Funkstationen eines überlasteten Organisationskanals gering gehalten werden. Durch Verkehrsmessungen kann in der ortsfesten Funkstation die momentane Verkehrsmenge auf den verschiedenen Organisationskanälen bestimmt werden. Die durch Festlegung im Funkübertragungssystem sowohl der ortsfesten Funkstation als auch der beweglichen Funkstation bekannte, feste Teilmengenanzahl ist so gewählt, daß in jeder Funkzone die verschiedenen Teilmengen möglichst gleich verteilt sind. Die Teilmengenanzahl (ntp) gibt an, in wieviele Teilmengen die Gesamtmenge der im Funkversorgungsgebiet der ortsfesten Funkstation befindlichen, beweglichen Funkstationen unterteilt ist. Durch die Verknüpfung von Teilmengenkennziffer und der über den Organisationskanal übertragenen Teilmengenmarkierung kann die bewegliche Funkstation sich eindeutig einem Organisationskanal zuordnen. Die Teilmengenmarkierung (atp) in einem Organisationskanal gibt an, welche Teilmengen von beweglichen Funkstationen diesen benutzen dürfen. Mit deren Veränderung kann die ortsfeste Funkstation auf einfache Weise die Verteilung der Verkehrsmenge auf deren verschiedenen Organisationskanäle steuern.

Vorteilhafte Ausgestaltungen der Erfindung sind in sen Unteransprüchen gekennzeichnet.

Die Erfindung wird im folgenden für verschiedene Fälle und anhand des in der Zeichnung dargestellten Ausführungsbeispiels näher beschrieben und erläutert. Es zeigen:

Fig. 1 eine erste Ausführungsform und

Fig. 2 eine weitere Ausführungsform für eine Steuereinrichtung gemäß der Erfindung.

Das Funkübertragungssystem ist in mehrere, aufeinander aufbauende Netzebenen gegliedert.Die unterste Ebene wird von sogenannten Funkzonen gebildet. Der Radius solcher Funkzonen liegt in Abhängigkeit von der Höhe der Antennenmasten von ortsfesten Funkstationen BS und bei einer Sendeleistung von maximal 50 Watt zwischen 5 und 15 km. Jede Funkzone wird von einer ortsfesten Funkstation BS versorgt. Diese kann Gespräche über sogenannte Funkvermittlungseinrichtungen vom und zum öffentlichen Fernsprechnetz weiter vermitteln. Mehrere benachbarte Funkzonen können zu einem sogenannten Rufbereich zuammengefaßt werden. Auf der Feststeite werden laufend die Aufenthaltsorte aller beweglichen Funkstationen MS erfaßt und in einem sogenannten Adressbuch gespeichert. Wechselt eine bewegliche Funkstation MS den Rufbereich, so erfolgt eine Änderung im Adressbuch.

Ein Gesprächswunsch eines Fernsprechteilnehmers eines öffentlichen Fernsprechnetzes zu einer beweglichen Funkstation MS führt zur Austrahlung eines Selektivrufs in allen Funkzonen jenes Rufbereichs, in dem die bewegliche Funkstation MS momentan erfaßt ist.

Das Sende- und Empfangsfrequenzband liegt beispielsweise zwischen B60 bis 960 MHz. Der Duplexabstand kann zu 45 MHz gewählt werden und Sende- und Empfangsfrequenzband können in ein Kanalraster von 25 KHz unterteilt werden. Die Kanäle werden im Duplexbetrieb betrieben. Jeder Funkzone des Funkübertragungssystems sind je nach Verkehrsaufkommen eine Anzahl von Sprechkanälen und jeweils mindestens ein Organisationskanal CCH zugeordnet. Dabei werden in räumlich benachbarten Funkzone unterschiedliche Frequenzen (Organisationskanäle CCH) verwendet. Zur Unterscheidung von Organisationskanal CCH und Sprechkanal werden diese durch einen speziellen Code gekennzeichnet. Bei Ausfall bzw. Störung eines Organisationskanals CCH kann jeder Sprechkanal durch Wechsel des Codes die Aufgaben des Organisationskanals CCH übernehmen. Auf eine sonst aus Sicherheitsgründen erforderliche Duplizierung von Organisationskanälen CCH kann dadurch verzichtet werden.

Beim aus der DE-AS 27 33 503 bekannten Funkübertragungssystem sucht eine bewegliche Funkstation nach dem Einschalten mit Hilfe eines Orientierungssuchlaufs jenen Organisationskanal mit dem höchsten Signal/Geräusch-Verhältnis. Die Kanalnummer dieses Organisationskanals wird gespeichert und die bewegliche Funkstation geht in den Ruhezustans. Die bewegliche Funkstation überwacht den Störabstand dieses Organisationskanals. Sinkt der Störabstand des momentan gespeicherten Organisationskanals unter einem vorgebbaren Wert ab, so tastet die bewegliche Funkstation andere Organisationskanäle bei einem Suchlauf ab und vergleicht die Störabstände. Durch diesen Vergleich kann ein Funkzonenwechsel bekannt werden und die bewegliche Funkstation speichert die Kanalnummer des entsprechenden Organisationskanals. In einer Funkzone befinden sich demnach bewegliche Funkstationen, welche sende- und empfangsbereit oder welche momentan über den Organisationskanal CCH z.B. einen Verbindungsaufbau über ortsfeste Funkstationen und Funkvermittlungseinrichtungen ins öffentliche Fernsprechnetz oder zu einer beweglichen Funkstation des Funkübertragungssystems Surchführen. Beim bekannten Funkübertragungssystem (DE-AS 27 33 503) speichert die bewegliche Funkstation jenen Organisationskanal, der das höchste Signal/Geräusch-Verhältnis aufweist. Dabei können, je nach Verkehrssituation, die Verkehrsmengen auf verschiedenen Organisationskanälen einer Funkzone unterschiedlich sein.

Im Funkübertragungssystem ist die Menge aller in deren Bereich befindlichen, beweglichen Funkstationen MS in eine konstante Anzahl ntp von Teilmengen TP unterteilt. Jede bewegliche Funkstation ist fest und eindeutig einer dieser Teilmengen TP zugeordnet. Zur Vereinfachung der Beschreibung wird im folgenden davon ausgegangen, daß die Menge aller beweglichen Funkstätionen MS in 100 Teilmengen TP unterteilt wird. Eine Teilmengenkennüiffer K ist Teil einer gespeicherten Kennung mid der beweglichen Funkstation MS. Die Zuordnung einer beweglichen Funkstation MS zu einer der Teilmengen TP kann beispielsweise anhand der beiden Endziffern y z der Kennung mid erfolgen.

Ein Kriterium mtp ist dann gleich den beiden Endziffern y z. Eine bewegliche Funkstation MS mit einer Kennung 59988 gehört demnach zu der Teilmenge TP = 88. Die ortsfeste Funkstation BS sendet auf jedem Organisationskanal CCH eine Teilmengenmarkierung atp zu den beweglichen Funkstationen MS. Aus der Verknüpfung von Teilmengenmarkierung atp und gespeicherter Teilmengenkennziffer K kann die bewegliche Funkstation MS eine eindeutige Zuordnung zu einem Organisationskanal CCH ableiten. Die von der ortsfesten Funkstation BS zu den beweglichen Funkstationen MS übertragene Teilmengenmarkierung atp kann beispielsweise aus zwei Teilen, einer größten und einer kleinsten Ziffer ltp und ftp, bestehen. Eine bewegliche Funkstation MS ordnet sich jenem Organisationskanal CCH zu, für den die Bedingung gilt

ftp $\leq$ mtp $\leq$ ltp

Im folgenden soll mtp = K gelten.

**Fall 1:**

Einer Funkzone sind momentan drei Organisationskanäle CCH zugeordnet, welche die Kanalüummern 598, 614 und 765 besitzen. Die Verkehrsmenge im Funkversorgungsgebiet der ortsfesten Funkstation BS ist dann gleich verteilt, wenn jeder Organisationskanal CCH ein Drittel der Verkehrsmenge aufweist. Die ortsfeste Funkstation BS teilt über den Organisationskanal CCHI (mit der Kanalnummer cnr = 598) in der Teilmengenmarkierung atp mit, daß die kleinste Ziffer ftp = 00 und die größte Ziffer ltp = 32 ist. Auf dem Organisationskanal CCH2 (mit der Kanalnummer cnr = 614) überträgt die ortsfeste Funkstation BS eine kleinste Ziffer ftp = 33 und eine größte Ziffer ltp = 65 zu den beweglichen Funkstationen MS. Entsprechend dazu über den Organisotionskanal CCH3 (mit der Kanalnummer cnr = 765) eine kleinste Ziffer ftp = 66 und eine größte Ziffer ltp = 99. Die bewegliche Funkstation MS mit der Teilmengenkennziffer K = 88 (Kennung 59988) ordnet sich dem Ornanisationskanal CCH3 zu, da für diesen die Bedingung

66 $\leq$ 88 $\leq$ 99

erfüllt ist. Die Kanalnummer cnr = 765 des Organisationskanals CCH3 kann in der beweglichen Funkstation MS gespeichert werden. Die bewegliche Funkstation MS ist aufgrund der eindeutigen Zuordnung über den Organisationskanal CCH3 von der ortsfesten Funkstation BS rufbar.

Jede bewegliche Funkstation MS ordnet sich nach dem Einschalten einem Draanisationskanal CCH einer Funkzone zu. Im weiteren Verlauf prüft die bewegliche Funkstation MS laufend das Erfüllen der Bedingung für diesen Organisationskanal CCH. Ist diese Bedingung nicht mehr erfüllt, so beginnt in der beweglichen Funkstation MS ein Suchlauf nach Organisationskanälen CCH, welche die Bedingung momentan erfüllen. Erfüllen mehrere Organisationskanäle CCH diese, so ordnet sich die bewegliche Funkstation MS vorzugsweise jenem, mit dem größten Signal/Geräusch-Verhältnis zu oder jenem, welcher mit höchster Feldstärke empfangen wird. Überträgt die ortsfeste Funkstation BS neben der Teilmengenmarkierung atp auch eine Markierung für den Rufbereich, so kann in der beweglichen Funkstation MS ein Rufbereichswechsel erkannt werden. Nur wenn die bewegliche Funkstation MS einen solchen erkennt, wird über den ausgewählten Organisationskanal CCH des neuen Rufbereichs eine Ummeldung vorgenommen.

Die ortsfeste Funkstation BS kann zur Steuerung der Verteilung der Verkehrsmenge auf deren Organisationskanäle die größte und kleinste Ziffer ltp und ftp ändern. Eine ungleiche Verteilung der Verkehrsmenge kann in der ortsfesten Funkstation BS durch Verkehrsmessungen auf den Organisationskanälen CCH festgestellt werden. Neben dem Vorteil, daß gezielte Wechselbefehle bei Veränderung der größten und kleinsten Ziffer ltp und ftp für jede einzelne bewegliche Funkstation MS nicht erforderlich sind, ist ein weiterer Vorteil die Verringerung der Verkehrsmenge auf den einzelnen Organisationskanälen CCH. In einer Funkzone muß ein Ruf nach einer bestimmten beweglichen Funkstation MS nur auf jeweils einem Organisationskanal CCH gesendet werden, da sich die bewegliche Funkstation MS, wenn überhaupt, einem bestimmten Organisationskanal CCH dieser Funkzone zugeordnet hat.

**Fall 2:**

Im folgenden sei angenommen, daß die Verkehrsmenge zu 40 % auf den Organisationskanal CCH1, zu 40 auf den Organisationskanal CCH2 und zu 20 % auf den Organisationskanal CCH3 aufgeteilt werden soll. Die ortsfeste Funkstation BS führt eine Neuverteilung der Verkehrsmenge durch, indem auf dem Organisationskanal CCH1 die kleinste Ziffer ftp = 00 und die größte Ziffer ltp = 39, auf dem Organisationskanal CCH2 die kleinste Ziffer ftp = 40 und die größte Ziffer ltp = 79 und auf dem Organisationskanal CCH3 die kleinste Ziffer ftp = 80 und die größte Ziffer ltp = 99 festgesetzt wird. Aufgrund der Veränderung der größten und kleinsten Ziffern ltp und ftp ordnen sich bewegliche Funkstation MS mit einer Teilmengenkennziffer K von 33 bis 39 vom Organisationskanal CCH2 um und Organisationskanal CCHI zu. Bewegliche Funkstationen MS mit einer Teilmengenkennziffer K von 66 bis 79 (bisher Organisationskanal CCH3) ordnen sich dem Organisationskanal CCH2 zu.

**Fall 3:**

Eine Umkonfiguration der Organisationskanäle CCH ist beispielsweise bei Ausfall eines Organisationskanals CCH erforderlich. Im folgenden sei angenommen, daß der Organisationskanal CCH2 ausfällt und die ortsfeste Funkstation BS, bzw. eine Funkvermittlungseinrichtung, einen Organisationskanal mit der Kanalnummer 623 als Ersatz festlegt. Der neue Organisationskanal CCH2 mit der Kanalnummer cnr = 623 (bisher Organisationskanal CCH2 mit der Kanalnummer cnr = 614) übernimmt die Aufgaben des ausgefallenen Organisationskanals CCH2, indem über diesen als kle.inste Ziffer ftp = 33 und als größte Ziffer ltp = 65 zu den beweglichen Funkstationen MS übertragen wird.

**Fall 4:**

Wie im Fall 3 sei angenommen, daß der Organsiationskanal CCH2 ausfällt, mit dem Unterschied daß die ortsfeste Funkstation BS bzw. die Funkvermittlungseinrichtung, keinen neuen Organisationskanal CCH2 als Ersatz bestimmt. Dir ortsfeste Funkstation BS überträgt über den Organisationskanal CCH1 (mit der Kanalnummer cnr = 589) als kleinste Ziffer ftp = 00 und als größte Ziffer ltp = 49. Über den Organisationskanal CCH2 (mit der Kanalnummer cnr = 765, vorher Organisationskanal CCH3) überträgt die ortsfeste Funkstation BS die kleinste Ziffer ftp = 50 und die größte Ziffer ltp = 99. Die Verkehrsmenge wird somit zu jeweils 50 % auf die Organisationskanäle CCH1 und CCH2 verteilt. Die bewegliche Funkstationen MS, die vorher sich dem Organisationskanal CCH2 zugeordnet haben, verteilen sich zur Hälfte jeweils auf die Organisationskanäle CCH1 und CCH2. Bewegliche Funkstationen MS, welche sich neu zuordnen müssen, finden diese nach einem Suchlauf.

Im folgenden wird angenommen, daß die ortsfeste Funkstation BS als Teilmengenmarkierung atp ein Wort mit sechzehn Bit auf zwei Organisationskanälen CCH1 und CCH2 sendet. Die Menge der im Funkversorgungsgebiet des Funkübertragungssystems befindlichen, beweglichen Funkstationen MN ist entsprechend einer Teilmengenanzahl ntp = 16 in sechzehn Teilmengen TP unterteilt.

Das Kriterium mtp wird in der beweglichen Funkstation MS berechnet. Dieses ist beispielsweise der Rest der Division von gespeicherter Teilmengenkennziffer K durch die Teilmengenanzahl ntp. Die bewegliche Funkstation MS mit der Teilmengenkennziffer K = 88 bestimmt das Kriterium mtp = 8.

Die ortsfeste Funkstation BS sendet auf den Organisationskanal CCH1 eine Teilmengenmarkierung

atp = 1111 1111 0000 0000 und auf den Organisationskanal CCH2 eine Teilmengenmarkierung atp = 0000 0000 1111 1111.

Die kleinste Ziffer ftp bzw. größte Ziffer ltp des Organisationskanals CCH1 ist null bzw. sieben (auf dem Organisationskanal CCH2 ist ftp = 8 und ltp = 15). Die bewegliche Funkstation MS mit dem Kriterium mtp = 8 ordnet sich somit dem Organisationskanal CCH2 zu.

Im folgenden ist dem ersten Bit der Teilmengenmarkierung atp das Kriterium mtp = 0, dem zweiten Bit das Kriterium mtp = 1 usw. und dem letzten Bit das Kriterium mtp = 15 zugeordnet. Die beweglichen Funkstationen MS ordnen sich einem Organisationskanal CCH zu, wenn dieser an der, dem Kriterium mtp zugeordneten Bitstelle der Teilmengenmarkierung atp z.B. den Logisch-1-Kennzustand aufweist. Die bewegliche Funkstation MS (mtp = 8) ordnet sich für die obengenannten Angaben dem Organisationskanal CCH2 zu.

Die beschriebene Verteilung der Verkehrsmenge auf verschiedene Organisationskanäle läßt sich stufenweise variieren.

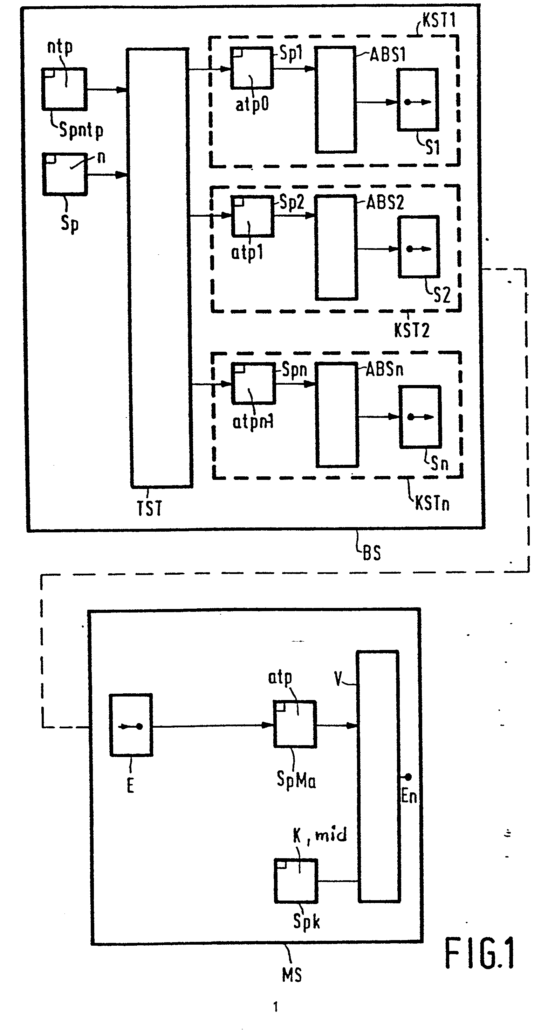

In Fig. 1 ist eine Steuereinrichtung in Blockschaltform dargestellt. Die ortsfeste Funkstation BS enthält Speicher SP und Spntp, deren Ausgänge jeweils mit einem Eingang einer Teilmengensteuerung TST verdungen sind, und n Kanalsteuerungen KST 1 bis KSTn, entsprechend der Zahl n von zugeordneten Organisationskanälen CCH.

Jede Kanalsteuerung (beispielsweise KSt 1) weist einen Speicher SP 1 auf, dessen Eingang jeweils mit einem Ausgang der Teilmengensteuerung TST und dessen Ausgang jeweils mit einem Eingang einer Abfragesteuerung ABS 1 verbunden ist. Der Ausgang der Abfragesteuerung ABS 1 ist an den Eingang eines Senders S1 angelegt.

In der beweglichen Funkstation MS sind ein Empfänger E und ein erster Speicher SpMa angeordnet, dessen Ausgang an einem Eingang einer Verknüpfungsschaltung V angeschlossen ist.

Die bewegliche Funkstation MS enthält weiterhin einen zweiten Speicher SpK, dessen Ausgang an einen Eingang der Verknüpfungsschaltung V angelegt ist.

In der ortsfesten Funkstation BS wird im Speicher SP die Zahl n gleich den der ortsfesten Station BS zugeordneten Organisationskanälen CCH und im Speicher Spntp die Teilmengenanzähl ntp abgespeichert. Die beiden Zahlen n und ntp werden der Teilmengensteuerung TST zugeführt, welche aus diesen für jeden Organisationskanal CCH eine Teilmengenmarkierung atp ableitet, welche im Speicher Spm (m = 1, ... n) der zugehörigen Kanalsteuerung KSTm eingespeichert wird.

Mit Hilfe der Abfragesteuerung ABSm wird die Teilmengenmarkierung atp ausgelesen und dem zugehörigen Sender Sm zugeführt.

In dem in der beweglichen Funkstation MS angeordneten Empfänger E wird die gesendete Teilmengenmarkierung atp empfangen und dem ersten Speicher SpMa zugeführt. Mit Hilfe der Verknüpfungsschaltung V werden die gespeicherte Teilmengenmarkierung atp mit einer in dem zweiten Speicher SpK gespeicherten Teilmengenkennziffer K verknüpft. An einer Klemme En der Verknüpfungsschaltung V ist ein Steuersignal zur Zuordnung der beweglichen Funkstation MS zu einem der Organisationskanäle CCH abgreifbar.

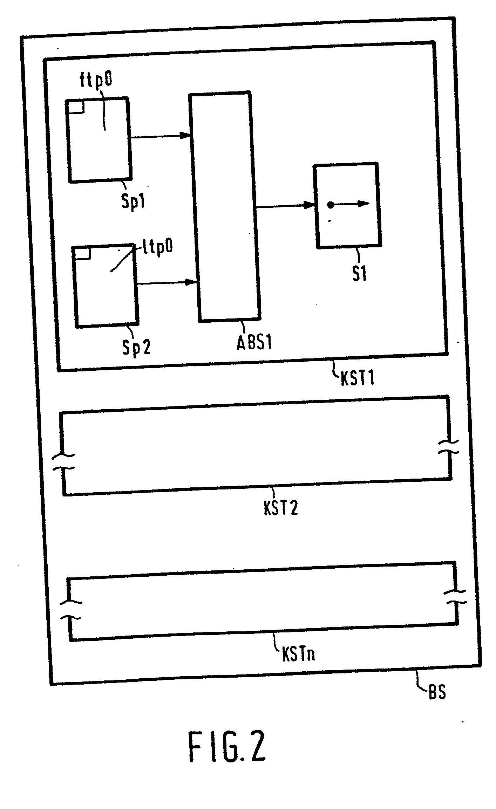

Fig. 2 zeigt eine Ausführungsform, bei der jede Kanalsteuerung KSTm (m = 1, ... n) der ortsfesten Funkstation BS mit zwei Speichern Sp1 und Sp2 versehen ist. In dem ersten Speicher Sp1 wird eine kleinste Zahl ftp und in dem zweiten Speicher Sp2 eine größte Zahl ltp abgespeichert. Diese beiden Zahlen werden für die Teilmengenmarkierung atp verwendet, wie z.B. auf Seite 8 der Beschreibung angegeben ist. Die beiden Speicher Sp und Spntp und die Teilmengensteuerung TST in der ortsfesten Funkstation BS entfallen bei dieser Ausführungsform.

**Patentansprüche**

1. Verfahren zur Verteilung der Verkehrsmenge auf verschiedene Organisationskanäle (CCH) eines Funkübertragungssystems mit ortsfesten Funkstationen (BS), welche in räumlicher Anordnung ein Zellularsystem mit Funkzonen bilden, mit mindestens einer ortsfesten Funkstation (BS) mit mindestens zwei Organisationskanälen (CCH) und mehreren Sprechkanälen und mit beweglichen Funkstationen (MS) und wobei die Menge der im Versorgungsgebiet des Funkübertragungssystems befindlichen, beweglichen Funkstationen (MS) in eine Anzahl von Teilmengen unterteilt ist, dadurch gekennzeichnet, daß die ortsfeste Funkstation (BS) auf jedem Organisationskanal (CCH) eine Teilmengenmarkierung (atp) sendet, und daß die bewegliche Funkstation (MS) die empfangene Teilmengenmarkierung (atp) mit einer gespeicherten Teilmengenkennziffer (K) verknüpft und in Abhängigkeit davon sich einem der Organisationskanäle (CCH) zuordnet.

2. Verfahren nach Anspruch 1, dadurch gekennzeichnet, daß die Teilmengenkennziffer (K) Teil einer gespeicherten Kennung (mid) der beweglichen Funkstation (MS) ist.

3. Verfahren nach Anspruch 2, dadurch gekennzeichnet, daß die Teilmengenkennziffer (K) aus den letzten zwei Ziffern (yz) der Kennung (mid) der beweglichen Funkstation (MS) abgeleitet wird.

4. Verfahren nach Anspruch 1, dadurch gekennzeichnet, daß die ortsfeste Funkstation (BS) über jeden Organisationskanal (CCH) eine größte und eine kleinste Ziffer (ltp und ftp) als Teile der Teilmengenmarkierung (atp) zu den beweglichen Funkstationen (MS) überträgt.

5. Verfahren nach Anspruch 1, dadurch gekennzeichnet, daß die Teilmengenmarkierung (atp) ein Bitmuster ist, wobei der einzelnen Bitstelle jeweils eine Teilmenge (TP) zugeordnet ist.

6. Verfahren nach Anspruch 1, dadurch gekenhzeichnet, daß die bewegliche Funkstation (MS) aus der Teilmengenkennziffer (K) ein Kriterium (mtp) ableitet und daß in Abhängigkeit vom Kriterium (mtp) und Teilmengenmarkierung (atp) die bewegliche Funkstation (MS) sich einem der Organisationskanäle (CCH) zuordnet.

7. Verfahren nach Anspruch 6, dadurch geknnzeichnet, daß das Kriterium (mtp) der Rest der Division von Teilmengenkennziffer (K) durch die konstante Teilmengenanzahl (ntp) ist.

8. Verfahren nach Anspruch 1 und 6, dadurch gekennzeichnet, daß das Kriterium (mtp) gleich den letzten zwei Ziffern (yz) der Kennung (mid) der beweglichen Funkstation (MS) ist.

9. Verfahren nach Anspruch 1, dadurch gekennzeichnet, daß die ortsfeste Funkstation (BS) die Teilmenoenmarkierung (atp) jedes ihr zugeordneten Organisationskanals (CCH) fest vorgibt.

10. Verfahren nach Anspruch 1, dadurch gekennzeichnet, daß die ortsfeste Funkstation (BS) die Teilmengenmarkierung (atp) so festlegt, daß auf allen ihr zugeordneten Organisationskanälen (CCH) der gleiche Anteil der Verkehrsmenge gemessen wird.

11. Steuereinrichtung zur Verteilung der Verkehramenge auf verschiedene Organisationskanäle (CCH) eines Funkübertragungasystems mit mindestens einer ortsfesten Funkstation (B8) mit mindestens zwei Organisationskanälen (CCH) und mehreren Sprechkanälen und mit beweglichen Funkstationen (M8) und bei der die Menge der im Versorgungagebiet des Funkübertragungssystems befindlichen, beweglichen Funkstationen (MS) in eine Anzahl von Teilmengen unterteilt ist, dadurch giekennzeichnet, daß in der ortsfesten Funkstation (BB) ein Speicher (Sp) vorhanden ist, in welchem eine Zahl (n) gleich den der ortsfesten Funkstation (BS) zugeordneten Organisationskanälen (CCH) abgespeichert ist, daß in der ortsfesten Funkstation (BS) ein Speicher (Spntp) vorgesehen ist, welcher die Teilmengenanzahl (ntp) speichert, daß eine mit den beiden Speichern (Sp, Spntp) verbundene Teilmengensteuerung (TST) aus der gespeicherten Teilmengenanzahl (ntp) und der Zahl (n) der zugeordneten Organisationskanäle (CCH) für jeden Organisationskanal (CCH) eine Teilmengenmarkierung (atp) ableitet, daß die Teilmengensteuerung (TST) die Teilmengenmarkierung (atp) einer Anzahl (n) von Kanalsteuerungen (z.B. KST 1) zuführt, daß jede Kanalsteuerung (z.B. KST 1) einen Speicher (Sp 1) zur Speicherung der Teilmengenmarkierung (z.B. aptO) aufweist, daß eine mit dem Speicher (Spl) verbundene Abfragesteuerung (z.B. ABSI) die gespeicherte Teilmengenmarkierung (z.B. atpO) ausliest und einem in der ortsfesten Funkstation (BS) angeordneten Sender (z.B. Sl) zuführt, daß ein in der beweglichen Funkstation (MS) angeordneter Empfänger (E), die gesendete Teilmengenmarkierung (z.B. atpO) empfängt und in einem ersten Speicher (SpMa) abspeichert, daß eine in der beweglichen Funkstation (MS) angeordnete Verknüpfungsschaltung (V) die gespeicherte Teilmengenmarkierung (z.B. atpO) mit einer in einem zweiten Speicher (SpK) gespeicherten Teilmengenkennziffer (K) verknüpft und daß an einer Klemme (En) der Verknüpfungsschaltung (V) ein Steuersignal zur Zuordnung der beweglichen Funkstation (MS) zu einem der Organisationskanäle (CCH) abgreifbar ist.

12. Steureinrichtung nach Anspruch 11, dadurch gekennzeichnet, daß die ortsfeste Funkstation (BS) nur Kanalsteuerungen (z.B. KST1) aufweist, daß jede Kanalsteuerung (z.B. KST1) zwei Speicher (Sp1, Sp2) zur Speicherung der Teilmengenmarkierung (z.B. atpO) aufweist, wobei in dem ersten Speicher (Sp1) eine kleinste Zahl (ftpO) und in dem zweiten Speicher (Sp2) eine größte Zahl (ltpO) abgespeichert wird.

**Claims**

1. A method of distributing the traffic load over different control channels (CCH) of a radio transmission system with base stations (BS), which in a spatial arrangement form a cellular system with radio zones, at least one base station (BS) with at least two control channels (CCH) and several speech channels and with mobile stations (MS), the number of mobile stations (MS) in the service area of the radio transmission system being divided into a number of groups, characterized in that the base station (BS) transmits a group code (atp) through each control channel (CCH), and that the mobile station (MS) combines the received group code (atP) with a stored group code number (K) and accordingly assigns itself to one of the control channels (CCH)

2. A method as claimed in Claim 1, characterized in that the group code number (K) is part of a stored identification code (mid) of the mobile station (MS).

3. A method as claimed in Claim 2, characterized in that the group code number (K) is derived from the last two digits (yz) of the identification code (mid) of the mobile station (MS).

4. A method as claimed in Claim 1, characterized in that the base station (BS) transmits a largest and a smallest digit (ltp and ftp) over each control channel (CCH) as parts of the group code (atp) to the mobile stations (MS).

5. A method as claimed in Claim 1, characterized in that the group code (atp) is a bit pattern, a group (TP) being assigned to each individual bit location.

6. A method as claimed in Claim 1, characterized in that the mobile station (MS) derives a criterion (mtp) from the group code number (K) and that the mobile station (MS) assigns itself to one of the control channels (CCH) in accordance with the criterion (mtp) and the group code (atp).

7. A method as claimed in Claim 6, characterized in that the criterion (mtp) is the remainder of the division of the group code number (K) by the constant number of groups (ntp).

8. A method as claimed in Claims 1 and 6, characterized in that the criterion (mtp) is equal to the last two digits (yz) of the identification code (mid) of the mobile station (MS).

9. A method as claimed in Claim 1, characterized in that the base station (BS) has a fixed value of the group code (atp) of each control channel (CCH) assigned to it.

10. A method as claimed in Claim 1, characterized in that the base station (BS) fixes the group code (atp) such that the same amount of traffic load is measured on all control channels (CCH) assigned to it.

11. A control arrangement for distributing the traffic load over different control channels (CCH) of a radio transmission system with at least one base station (BS) having at least two control channels (CCH) and several speech channels and with mobile stations (MS), the number of mobile stations (MS) inside the service area of the radio transmission system having been divided into a number of groups, characterized in that the base station (BS) comprises a memory (Sp) in which a number (n) equal to the number of control channels (CCH) assigned to the base station (BS) is stored, that the base station (BS) comprises a memory (SPMTP) storing the number of groups (ntp), that a group control (TST) connected to the two memories (Sp, Spntp) derives a group code (atp) for each control channel (CCH) from the stored number of groups (npt) anf the number (n) of the assigned control channels (CCH), that the group control (TST) supplies the group code (atp) of a number (n) of channel controls (for example KST1), that each channel control (for example KST1) comprises a memory (Sp1) to store the group code (for example aptO), that an interrogation control (for example ABS1) connected to the memory (Sp1) reads the stored group code (for example atpO) and applies this group code to a transmitter (for example S1) comprised in the base station (BS) that a receiver (E) comprises in the mobile station (MS) receives the transmitted group code (for example atpO) storing this in a first memory (SpMa), that a logic combining circuit (V), comprises in the mobile station (MS), combines the stored group code (for example atpO) with a group code number (K) storef in a second memory (SpK) and that a control signal for assigning the mobile stations (MS) to one of the control channels (CCH) can be taken from a terminal ($E_n$) of the logic combining circuit (V).

12. A control arrangement as claimed in Claim 11, characterized in that the base station (BS) only comprises channel control means (for example KST1), each channel control (for example KST1) having two memories (Sp1, Sp2) to store the group code (for example atpO), storing in the first memory (Spl) a smallest number (ftpO) and in the second memory (Fp2) a largest number (LTPO).

**Revendications**

1.- Procédé pour répartir le volume de trafic sur divers canaux de service (CCH) d'un système de radiocommunications comportant des postes de radio fixes (BS) qui sont agencés dans l'espace de manière à former un système cellulaire à zones radio, au moins un poste de radio fixe (BS) comportant au moins deux canaux de service (CCH) et plusieurs canaux de conversation et des postes de radio mobiles (MS), la quantité des postes de radio mobiles se trouvant dans le domaine de couverture du système de radiocommunications étant répartie en un certain nombre de quantités partielles, caractérisé en ce que le poste de radio fixe (BS) émet sur chaque canal de service (CCH) un marquage de quantité partielle (atp) et le poste de radio mobile (MS) combine le marquage de quantité partielle (atp) reçu avec un chiffre caractéristique de quantité partielle (K) stocké et, en fonction de cela, s'attribue un des canaux de service (CCH).

2.- Procédé suivant la revendication 1, caractérisé en ce que le chiffre caractéristique de quantité partielle (K) fait partie d'une identification stockée (mid) du poste de radio mobile (MS).

3.- Procédé suivant la revendication 2, caractérisé en ce que le chiffre caractéristique de quantité partielle (K) est dérivé des deux derniers chiffres (yz) de l'identification (mid) du poste de radio mobile (MS).

4.- Procédé suivant la revendication 1, caractérisé en ce que le poste de radio fixe (BS) transmet par l'intermédiaire de chaque canal de service (CCH) un plus grand chiffre et un plus petit chiffre (atp et ftp) en tant que parties de marquage de quantité partielle (atp) aux postes de radio mobiles (MS).

5.- Procédé suivant la revendication 1, caractérisé en ce que le marquage de quantité partielle (atp) est un échantillon de bits, une quantité partielle (TP) étant chaque fois associée à un emplacement de bit individuel.

6.- Procédé suivant la revendication 1, caractérisé en ce que le poste de radio mobile (MS) dérive du chiffre caractéristique de quantité partielle (K) un critère (mtp) et en fonction du critère (mtp) et du marquage de quantité partielle (atp), le poste de radio mobile (MS) s'attribue un des canaux de service (CCH).

7.- Procédé suivant la revendication 6, caractérisé en ce que le critère (mtp) est le reste de la division du chiffre caractéristique de quantité partielle (K) par le nombre de quantités partielles constant (ntp).

8.- Procédé suivant les revendications 1 et 6, caractérisé en ce que le critère (mtp) est égal aux deux derniers chiffres (yz) de l'identification (mid) du poste de radio mobile (MS).

9.- Procédé suivant la revendication 1, caractérisé en ce que le poste de radio fixe (BS) prédéfinit le marquage de quantité partielle (atp) de chaque canal de service (CCH) qui est associé.

10.- Procédé suivant la revendication 1, caractérisé en ce que le poste de radio fixe (BS) fixe le marquage de quantité partielle (atp) d'une manière telle que la même fraction du volume de trafic soit mesurée sur tous les canaux de service (CCH) qui y sont attribués.

11.- Dispositif de commande pour répartir le volume de trafic sur divers canaux de service (CCH) d'un système de radiocommunication comportant au moins un poste de radio fixe (BS) présentant au moins deux canaux de service (CCH) et plusieurs canaux de conversation et des postes de radio mobiles (MS) et dans lequel la quantité des postes de radio mobiles (MS) se trouvant dans le domaine de couverture du système de radiocommunications est répartie en un certain nombre de quantités partielles, caractérisé en ce que dans le poste de radio fixe (BS) est prévue une mémoire (Sp) dans laquelle un nombre (n) égal aux canaux de service (CCH) associés au poste de radio fixe (BS) est stocké, dans le poste de radio fixe (BS) est prévue une mémoire (Spntp) qui stocke le nombre de quantités partielles (ntp), un dispositif de commande de quantités partielles (TST) relié aux deux mémoires (Sp, Spntp) dérive un marquage de quantité partielle (atp) pour chaque canal de service (ntp) à partir du nombre de quantités partielles stocké (ntp) et du nombre (n) des canaux de service associé, le dispositif de commande de quantités partielles (TST) fournit le marquage de quantité partielle (atp) à un nombre (n) de dispositifs de commande de canaux (par exemple KST 1), chaque dispositif de commande de canal (par exemple KST 1) comporte une mémoire (Sp 1) pour stocker le marquage de quantité partielle (par exemple aptO), un dispositif de commande d'interrogation (par exemple ABS1) relié à la mémoire (Sp1) déclenche le marquage de quantité partielle stocké (par exemple atpO) et l'applique à un émetteur (par exemple S1) installé dans le poste de radio fixe (BS), un récepteur (E) monté dans le poste de radio mobile (MS) reçoit le marquage de quantité partielle émis (par exemple atpO) et le stocke dans une première mémoire (SpMa), un circuit logique (V) installé dans le poste de radio mobile (MS) combine le marquage de quantité partielle stocké (par exemple atpO) avec un des chiffres caractéristiques de quantité partielle (K) stockés dans une seconde mémoire (SpK) et à une première borne (En) du circuit logique (V) peut être obtenu un signal de commande permettant d'attribuer le poste de radio mobile (MS) à un des canaux de service (CCH).

12.- Dispositif de commande suivant la revendication 11, caractérisé en ce que le poste de radio fixe (BS) ne comporte que des dispositifs de commande de canaux (par exemple KST1), chaque dispositif de commande de canal (par exemple KST1) comporte deux mémoires (Sp1, Sp2) pour le stockage du marquage de quantité partielle (par exemple atpO), étant entendu que dans la première mémoire (Sp1) est stocké un plus petit chiffre (ftpO) et dans la seconde mémoire (Sp2) est stocké un plus grand chiffre (ltpO).

FIG.1

FIG.2